# EUROPÄISCHE PATENTSCHRIFT

(11) **EP 1 987 299 B1**
(45) Veröffentlichungstag und Bekanntmachung des Hinweises auf die Patenterteilung: **26.08.2009**
(21) Anmeldenummer: 07703115.1
(22) Anmeldetag: 30.01.2007
(51) Int. Cl.: F25B 9/00

(54) **VERFAHREN ZUR SPEICHERUNG UND RÜCKGEWINNUNG VON ENERGIE**
METHOD FOR STORING AND RECOVERING ENERGY
PROCÉDÉ D'ACCUMULATION ET DE RÉCUPÉRATION D'ÉNERGIE

(30) Priorität: 16.02.2006 DE 102006007119
(43) Veröffentlichungstag der Anmeldung: 05.11.2008
(73) Patentinhaber: Thermea.Energiesysteme GmbH, 01705 Freital (DE)
(72) Erfinder: WOLF, Bodo, Max, 87719 Mindelheim (DE)
(74) Vertreter: Kaufmann, Sigfrid
(86) Internationale Anmeldenummer: PCT/EP2007/000760
(87) Internationale Veröffentlichungsnummer: WO 2007/093277

(56) Entgegenhaltungen:
- EP-A- 1 577 548
- DE-A1- 2 820 689
- US-A- 3 832 853
- US-A- 4 103 493

## Beschreibung

Die Erfindung betrifft ein Verfahren zur Speicherung von Energie, insbesondere von Elektroenergie aus regenerativer Energie, wie Sonnenstrahlung und Windenergie, aber auch von industrieller Energie; die in Elektroenergie umgewandelt, aber auf Grund der Bedarfssituation nicht direkt zur Deckung des Bedarfes eingesetzt werden kann sowie zur Rückumwandlung der gespeicherten Energie in technische Arbeit bzw. Elektroenergie mit oder ohne Auskopplung von Wärmeenergie.

Das Anwendungsgebiet der Erfindung ist vorrangig die bedarfsgerechte lokale Versorgung von bauwerken aller Art sowie von Gewerbe- und Landwirtschaftsbetrieben mit Elektroenergie aus regenerativen Energiequellen zeitlich unabhängig von der Energiebereitstellung, aber auch die industrielle Energieversorgung mit fossilen Brennstoffen und/oder regenerativen Energieträgern.

Beim Stand der Technik wird die mit Hilfe von Sonnenstrahlung und Windenergie zeitweise gewonnene Elektroenergie überwiegend ohne Zwischenspeicherung in die elektrischen Versorgungssysteme eingespeist und dem Verbraucher zur zeitgleichen Verwendung angeboten. Diese Art der Nutzung ist nur möglich, weil gegenwärtig der Bedarf an Elektroenergie jederzeit deutlich über dem Angebot von Elektroenergie aus regenerativer physikalischer Energie liegt und der Lastausgleich von der konventionellen Energieversorgung übernommen wird. Die bedarfsgerechte Versorgung der Abnehmer mit Elektroenergie sichert deshalb die mit fossilen Brennstoffen oder Kernenergie betriebenen, regelbaren Kraftwerke, die Wasserkraftanlagen und die Pumpspeicherwerke. Eine Ausnahme in der regenerativen Energieversorgung sind die Biomassekraftwerke, die leistungsgeregelt betrieben werden können und bei denen die Energiespeicherung auch über die Bevorratung des Brennstoffes, in diesem Falle nachwachsender Brennstoff, erfolgt. Eine netz- und brennstofffreie, zeitlich unbeschränkt bedarfsgerechte Versorgung des Anwendungsgebietes auf Basis regenerativer Windenergie und Sonnenstrahlung ist beim Stand der Technik, insbesondere bei dem der chemoelektrischen Batterien, der Wasserelektrolyse in Verbindung mit der Wasserstoffspeicherung, der Druckluftspeicher u.a. nicht gegeben, weil diese Möglichkeiten der Speicherung oder Umwandlung von Elektroenergie in latente bzw. chemische Energie und deren Rückumwandlung in Elektroenergie, insbesondere gegenüber der konventionellen Energieversorgung über Energienetze und der Brennstoffbevorratung, die erforderliche Leistung nicht erreichen oder nicht wirtschaftlich sind.

US-A-4 103 493 offenbart ein Verfahren zur Verwendung von Sonnenstrahlung.

Der wirtschaftliche Nachteil beim Stand der Technik besteht deshalb vor allem darin, dass die Unberechenbarkeit der Sonnen- und Windenergie durch Reservekapazitäten der konventionellen Energieversorgung ausgeglichen werden muss. Dabei greift die konventionelle Energieversorgung auf große Brennstofflagerstätten und den Betrieb von Kraftwerken und elektrischen Netzen mit großer Leistung zurück, d.h. die Erzeugung und Fortleitung der Elektroenergie erfolgt zentral, während die Anwendung der Elektroenergie bei einer Vielzahl kleiner variabler Verbraucher dezentral stattfindet.

Demgegenüber fällt die Sonnen- und Windenergie, in einigen Fällen auch industrielle und gewerbliche Abwärme direkt beim Anwender von Elektroenergie, also dezentral, aber nicht bedarfsgerecht, an. Dazu kommt, dass die großen zentralen Kraftwerksprozesse thermodynamisch bedingt nur einen Teil der zugeführten Brennstoffenergie in Elektroenergie umwandeln können und der nicht umwandelbare Teil als Anergie an die Umgebung abgegeben werden muss.

Daraus leitet sich die technische Aufgabe der Erfindung ab, die darin besteht die lokal und unberechenbar anfallende Sonnen- und Windenergie oder andere zeitlich überschüssige Energie an dem Ort zu speichern und bedarfsgerecht, vor allem als Elektroenergie, wieder freizusetzen, an dem diese Energie zur Verfügung steht.

Das Ziel der Erfindung ist eine zeitlich unbeschränkte, bedarfsgerechte und wirtschaftlich wettbewerbsfähige Versorgung des Anwendungsgebietes mit Elektro- und erforderlichenfalls mit Wärmeenergie auf der Basis von Sonnen- und Windenergie oder anderer zeitweise überschüssiger Energie.

Die technische Aufgabe wird gelöst und das Ziel der Erfindung erreicht durch Be- und Entladung eines Wärmespeichers, indem zeitlich überschüssige Energie, vorrangig Sonnen- und Windenergie, aber auch andere lokale Überschussenergie, in Elektroenergie umgewandelt wird, die erfindungsgemäß zum Antrieb eines reversiblen thermischen Kreisprozesses genutzt wird, der
- im Zyklus der Beladung des Speichers als Wärmepumpenprozess arbeitet, lokale Umgebungswärme aufnimmt, diese im Temperaturniveau anhebt und damit den Wärmespeicher thermisch auflädt, indem das Arbeitsmittel des Kreisprozesses unterhalb seines kritischen Druckes in einer Prozessstufe Verdampfung durch Zuführung von Umgebungswärme verdampft und danach
   - durch Zuführung von interner Prozesswärme vor seiner Kompression auf überkritischen Druck über seine kritische Temperatur rekuperativ vorwärmt wird, bevor es
   - in einer ersten Kühlstufe annähernd isobar durch ein Wärmeträgermedium rekuperativ gekühlt wird, wobei es einen Teil seiner Wärmeenergie oberhalb der kritischen Temperatur rekuperativ und annähernd isobar
   - an ein Wärmeträgermedium abgibt, das die Wärme selbst speichert oder zu einer Speichermasse transportiert,
   - in einer zweiten Kühlstufe rekuperativ in parallelen Stoffströmen unter überkritischem Druck kondensiert wird, wobei mindestens jeweils ein Stoffstrom zur prozessintemen rekuperativen Vorwärmung des Arbeitsmittels vor der Kompression und zur Aufheizung des Wärmespeichers verwendet wird,
      bevor das Arbeitsmittel erneut der.Prozessstufe Verdampfung zugeführt wird, während
      - im Zyklus der Entladung der Kreisprozess als Kraftprozess, mit oder ohne Auskopplung von Wärmeenergie zur Erzeugung von Elektroenergie betrieben wird, indem das gasförmige Arbeitsmittel des Kreisprozesses
         - durch Abführung seiner Kondensationswärme an die Umgebung vollständig kondensiert,
         - im flüssigen Zustand auf einen überkritischen Druck, der über dem Druck, des Arbeitsmittels nach der Kompression beim Wärmepumpenbetrieb liegt, angehoben,
         - in diesem überkritischen Zustand in einer ersten Stufe in parallel Stoffströmen durch rekuperativer Zuführung von Wärmeenergie aus dem Speicher und durch prozessinterne Rekuperation verdampft und überhitzt,
         - in einer zweiten Stufe durch weitere Zuführung von Wärmeenergie aus dem Speicher im gasförmigen Zustand weiter überhitzt,
         - unter Abgabe von technischer Arbeit, vorrangig zum Antrieb eines Elektrogenerators, auf Kondensationsdruck und bis in die Nähe der oberen Temperatur der ersten Stufe zur Verdampfung und Überhitzung expandiert und dort bis in die Nähe der Kondensationstemperatur abgekühlt wird,
   bevor das Arbeitsmittel erneut durch Abgabe seiner Kondensationswärme kondensiert wird.

Es ist weiterhin erfindungsgemäß Kohlendioxid als Arbeitsmittel im beschriebenen reversiblen Kreisprozess zu verwenden und im Zyklus der Beladung des Wärmespeichers Wärmeenergie an externe Abnehmer abzugeben, indem vom Wärmeträgermassestrom nach der ersten Stufe der Vorwärmung ein Teilstrom entnommen, in einer Wärmesenke abgekühlt und danach dem Wärmeträgermassestrom vor der ersten Stufe der Vorwärmung wieder zugeführt wird.

Der wirtschaftliche Vorteil der Erfindung begründet sich in der damit gegebenen Möglichkeit zeitlich überschüssige Energie, insbesondere unberechenbare regenerative Energie dezentral und/oder zentral unter Einbeziehung von Umgebungswärme mit hohem Wirkungsgrad zu speichern und die Energie teilweise in ihrer höchsten Qualität, nämlich Elektroenergie, wieder freizusetzen, ohne auf andere, insbesondere fossile Brennstoffe beim Lastausgleich zurückgreifen zu müssen. Die Erfindung ermöglicht eine lokal autarke Versorgung mit Elektroenergie und Wärme auf Basis regenerativer Energie, unabhängig von anderen Energieträgern, wie Kohle, Öl, Gas und Kernenergie. Die Erfindung widerlegt die auf Basis des Standes der Technik bestehende Meinung, dass mit regenerativer Energie, insbesondere mit Windkraft und Fotovoltaik keine bedarfsgerechte Versorgung mit Strom und Wärme möglich ist.

### Ausführungsbeispiel:

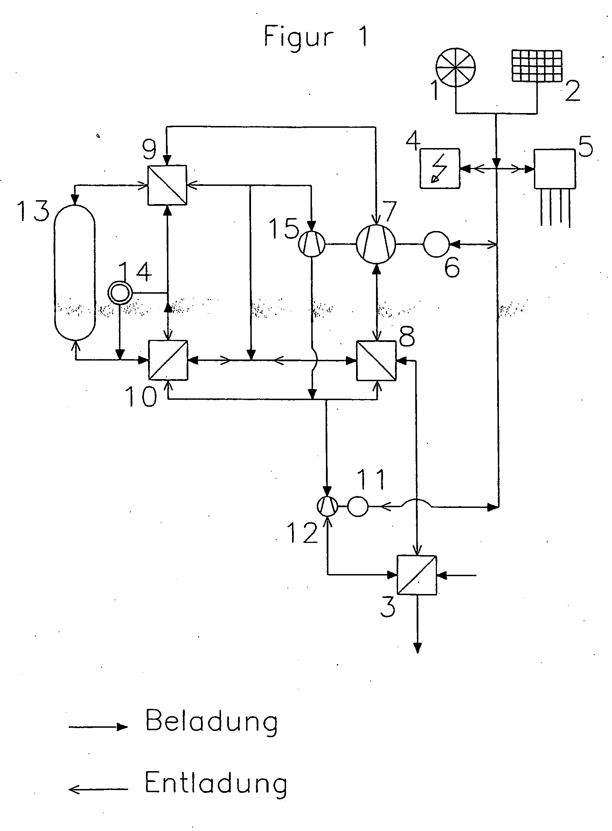

Die Erfindung wird mit Beispiel 1 und Figur 1 für eine Energieversorgung eines Einfamilienhauses mit Hilfe eines reversiblen Kreisprozesses beschrieben, der zum Zwecke der Energiespeicherung als Wärmepumpenprozess (volle Pfeilspitze) und zum Zwecke der Energieauskopplung als Kraftprozess (leere Pfeilspitze) erfindungsgemäß betrieben wird.

Der Kreisprozess arbeitet im Beispiel in Kopplung mit einer Windkraftanlage 1 und/oder Fotovoltaikanlage 2, die zusammen im Betriebszustand eine elektrische Leistung von 10 kW und eine elektrische Tagesleistung von 120 kWh erreichen sollen, sowie mit einer 10-bar Druckwasser-Wärmespeicherung 13 und dem Umweltenergiepotential 3 wie folgt:

Die Elektroenergieerzeugung in 1 und 2 dient vorrangig der Versorgung der an die elektrische Hausverteilung 5 angeschlossenen Abnehmer und zur Aufladung der Elektroenergiespeicherung 4, der die kurzeitige Differenzen zwischen der Bereitstellung und dem Verbrauch von Elektroenergie mit zusammen einer elektrischen Leistung von 5 kW und einem Tagesbedarf von 20 kWh ausgleicht.

Die überschüssige Elektroenergie aus 1 und 2, die nicht in 4 gespeichert und an 5 abgegeben werden kann, in Höhe von 100 kWh/d wird dem Kreisprozess, der als Arbeitsmittel Kohlendioxid verwendet und in diesem Falle als Wärmepumpenprozess arbeitet, über den Elektromotor 6, der die Kompressiosstufe 7 antreibt, zugeführt.

Vor der Überführung des Arbeitsmittels in den überkritischen Bereich durch Kompression des Kohlendioxides von 39,8 auf 120,0 bar in 7, wofür 0,021 kWh mechanische Energie/kg Kohlendioxid über 6 zugeführt werden, wird das Kohlendioxid in 3 durch Zuführung von ca. 0,057 kWh Erdwärme/kg im unterkritischen Bereich bei einem Druck von 40 bar und einer Temperatur von 10°C isotherm verdampft und danach in 8 durch innere Rekuperation in Höhe von 0,018 kWh/kg von 10 auf 50°C überhitzt.

Das durch Kompression in 7 auf 120 bar auf 158°C überhitzte Kohlendioxid wird in 9 rekuperativ durch im Gegenstrom fließendes Druckwasser auf 55°C gekühlt, wodurch sich das Druckwasser auf 155°C erwärmt. Dabei gibt das Arbeitsmittel 0,044 kWh/kg Wärmeenergie an das Druckwasser ab, das danach mit einem Massestrom von 0,380 kg/kg Kohlendioxid und einer Temperatur von 155°C dem Energiespeicher 13 zufließt.

Der Kohlendioxidmassestrom wird nach 9 aufgeteilt und in den Rekuperatoren 8 und 10 unter einem Druck von 118 bar kondensiert, dabei müssen insgesamt 0,050 kWh Wärmeenergie im Temperaturbereich von 55 bis 20°C abgeführt werden, wovon 0,018 kWh auf die innere Rekuperation in 8 entfallen. Im Rekuperator 10 müssen somit 0,038 kWh an das Druckwasser übertragen werden, das mit einer Temperatur von 15°C und entsprechend Anforderung aus 9 mit einem Massestrom von 0,380 kg Wasser/kg Kohlendioxid aus dem Energiespeicher 13 zugeführt wird. Für die vollständige Abkühlung des Kohlendioxides in 10 ist eine Wassermasse von 0,820 kg/kg Kohlendioxid erforderlich, deshalb werden 0,440 kg Wasser/kg Kohlendioxid dem Wassermassestrom nach 10 entnommen, über eine Wärmesenke 14, z.B. eine Fußbodenheizung, geleitet und danach dem Wassermassestrom vor der Rekuperation in 10 wieder zugeführt. Die Wärmeübertragung in der Wärmesenke 14 beträgt 0,020 kWh/kg Kohlendoxid.

Nach der Rekuperation in 8 und 10 liegt das Kohlendioxid unter einem Druck von ca. 118 bar und mit einer Temperatur von 20°C vor. Mit diesen Parametern wird das Kohlendioxid unter Abgabe von 0,003 kWh technischer Arbeit pro kg Kohlendioxid über 11 auf den für die Verdampfung in 3 erforderlichen Druck von 40 bar in 12 entspannt. Der Nettobedarf für die Kompression des Kohlendioxides in 7 sinkt damit auf 0,018 kWh/kg.

Die Tagesbilanz des Wärmepumpenprozesses ist dann folgende:
- regenerative elektrische Arbeit : 120 kWh/d
- Elektroenergiedirektverbrauch : 20 kWh/d
- zugeführte Elektroenergie aus Windkraft und Fotovoltaik : 100 kWh/d
- komprimiertes Kohlendioxid : 5550 kg/d
- aufgeheiztes Druckwasser : 2100 kg/d
- im Druckwasser gespeicherte Wärme : 340 kWh/d
- abgegebene Heizwärme : 96 kWh/d
- Summe der Wärmeabgabe : 436 kWh/d

Der erfindungsgemäße Kreisprozess kann somit eine Wärmepumpenkennzahl (gespeicherte + abgegebene Heizwärme : zugeführte Elektroenergie) von höher 4:1 erreichen.

Steht keine Wärmesenke 14 zur Verfügung, wird die Rezikulation von Druckwasser um die Rekuperation10 eingestellt und stattdessen ein Teilstrom des Kohlendioxides in 15 unter Abgabe von technischer Arbeit entspannt.
Im Beispiel hat der Druckwasserspeicher eine Kapazität von 10. 000 kg Wasser. Unter den getroffenen Annahmen sind für die vollständige Aufladung des Speichers 5,0 Tage erforderlich. Der Speicher verfügt dann über eine thermische Kapazität von 1650 kWh.

Die Entladung des Speichers erfolgt zum Zwecke der Erzeugung von Elektroenergie erfindungsgemäß, wenn nicht genügend regenerative Elektroenergie aus Windkraft und/oder Fotovoltaik zur Verfügung steht, wie folgt:

Gasförmiges Kohlendioxid wird unter einem Druck von 50 bar und mit einer Temperatur von 20°C dem rekuperativen Erdkondensator 3 zu geleitet, wo das Arbeitsmittel weiter abkühlt und bei 15°C unter Abgabe von 0,056 kWh/kg Wärme an das Erdreich kondensiert. Das flüssige Kohlendioxid wird durch die Pumpe 12 auf einen Druck von 180 bar angehoben. Der Aufwand an elektrischer Pumpleistung in 6 beträgt 0,004 kWh/kg und die Temperatur des flüssigen Kohlendioxides steigt von 15 auf 27°C.

Nach der Druckerhöhung in 12 durchströmt das flüssige Kohlendioxid die Rekuperatoren 8 und 10, wobei es durch Zuführung von 0,028 kWh Wärmeenergie pro kg Kohlendioxid im überkritischen Zustand verdampft und isobar auf 50°C vorgewärmt wird.

Der Anteil der prozessinternen rekuperativen Verdampfung in 8 beträgt daran 0,012 kWh/h. Somit müssen in 10 noch 0,016 kWh Wärmeenergie extern durch Druckwasser aus der Speicherung 13 an den Teilstrom Kohlendioxid übertragen werden, der nicht kreisprozessintern rekuperativ in 8 verdampft werden kann. Das erfordert einen spezifischen Massestrom von 0,56 kg Druckwasser/kg Kohlendioxid. Das so verdampfte und auf 50°C vorgewärmte Kohlendioxid wird in 9 überhitzt auf 150°C, was eine Wärmezuführung von 0,065 kWh/kg Kohlendioxid erfordert. Zu diesem Zwecke wird der Überhitzung in 9 ein spezifischer Massestrom von 0,56 kg Druckwasser/kg Kohlendioxid zugefahren, der in 9 von 155 auf 55°C abgekühlt wird, d.h. dem Kreisprozess werden über Druckwasser 0,083 kWh Wärmeenergie/kg Kohlendioxid zugeführt.

Das überhitzte Kohlendioxid wird in 7 unter Abgabe technischer Arbeit an den elektrischen Generator 6 von 180 auf 50 bar expandiert. Dabei kühlt sich das Kohlendioxid auf 67°C ab und der elektrische Generator 6 kann 0,020 kWh Elektroenergie pro kg Kohlendioxid abgeben, wovon 0,004 kWh/kg Kohlendioxid für die Druckerhöhung in 12 benötigt werden. Die Nettostromerzeugung beträgt damit 0,016 kWh/kg Kohlendioxid.

Für die Rückgewinnung von 20 kWh Elektroenergie pro Tag müssen somit 1250 kg Kohlendioxid entspannt werden und dem Speicher 13 werden 700 kg/d 155°C heißes Druckwasser entnommen.

Der Speichervorrat reicht somit für eine elektrische Arbeit von 280 kWh über 14 Tage und der Gesamtzyklus beträgt, ohne Zwischenbeladung, 19 Tage. Da für die Beladung des Speichers 13 über 5 Tage 500 kWh Elektroenergie zugeführt wurden, beträgt der elektrische Rückgewinnungsgrad 56 %. Unter Berücksichtigung der während der Beladung über 5 Tage abgegebenen Heizwärme in Höhe von 480 kWh ergibt sich, entsprechend (280 + 480) kWh : 500 kWh, allerdings ein Nutzenergie-wirkungsgrad von 152 %.

Gibt es während der Entladung der Druckwasserspeicherung 13, wie bei der Beladung, Heizwärmebedarf in Höhe von 96 kWh/d, dann beträgt die Druckwasserentnahme ca. 1400 kg/d, d.h. der Speicher 13 kann die Versorgung des Bauwerkes über 7 Tage mit Elektroenergie, Wärme und Warmwasser versorgen. Die Energieausbeute beträgt dann über den Gesamtzyklus von 12 Tagen (5 Tage Beladung, 7 Tage Entladung ohne Zwischenaufladung):
- direkte Stromversorgung (5 x 20 kWh) : 100 kWhₑₗ
- Stromrückgewinnung (7 x20 kWh): 140 kWhₑₗ
- Heizwärme bei Beladung (5 x 96 kWh) : 480 kWhₜₕ
- Heizwärme bei Entladung (7 x 96 kWh) : 672 kWhₜₕ
- Gesamte Nutzenergiebereitstellung : 1392 kWh
- eingesetzte regenerative Elektroenergie (5 x120 kWh) : 600 kWhₑₗ

Ausnutzung der regenerativen Energie (1392 : 600) kWh x100 : 232 % Umwandlungsgrad des Kreisprozesses (1292 : 500) kWh x100 : 258 % :

Beispiel 2 beschreibt die Anwendung der Erfindung in Kombination mit einer 2 MWₑₗ- Windkraftanlage über einen Volllastzyklus von 24 Stunden mit einer Stromproduktion von 48 MWhₑₗ, die dem Bedarf gerecht wird, aber nicht dem Lastgang. Es wird angenommen, dass der Abnehmer nachts von 22 bis 6 Uhr keinen Bedarf an Elektroenergie hat weil, er für diese Zeit ausreichende eigene Kapazitäten zur Verfügung hat. Damit stehen 16 MWhₑₗ zur Umwandlung in 64 MWhₜₕ Wärmeenergie und zur Beladung eines Wärmespeichers zur Verfügung. Die Rückgewinnung von Elektroenergie soll ohne Auskopplung von Wärmeenergie in den Spitzenzeiten von 6 bis 10 Uhr und von 18 bis 22 Uhr, also über 8 Stunden erfolgen. Als Wärmeträger und Speichermedium wird Druckwasser mit einer Temperaturspreizung zwischen Be- und Entladung von 20 bis 180°C eingesetzt, d.h. die spezifische Kapazität der Wärmespeicherung beträgt 186 kWh/m³ Druckwasser. Daraus ergibt sich ein Speichervolumen von 344 m³, was bei einem Speicherdurchmesser von 3,0 m 3 Schichtenspeicher mit einer Höhe von 20 m erfordert . Damit kann eine 2 MW-Windkraftanlage in Kombination mit dem erfindungsgemäßen Verfahren bei durchgängigem Betrieb mit installierter Leistung einen Abnehmer versorgen, dessen Elektroenergiebedarf zwischen 0 und 5 MW schwankt.

## Patentansprüche

1. Verfahren zur Speicherung und Rückgewinnung von Energie, insbesondere Sonnen- und Windenergie, die in Elektroenergie umgewandelt, genutzt wird zur Be- und Entladung eines Wärmespeichers mit Hilfe eines reversiblen thermischen Kreisprozesses, der im Zyklus der Beladung des Speichers als Wärmepumpenprozess arbeitet, der lokale Umgebungswärme aufnimmt, diese im Temperaturniveau anhebt und damit den Wärmespeicher thermisch auflädt, indem das Arbeitsmittel des Kreisprozesses nach seiner Verdampfung durch Umgebungswärme unterhalb seines kritischen Druckes vor seiner Kompression auf überkritischen Druck durch Zuführung von interner Prozesswärme über seine kritische Temperatur rekuperativ vorgewärmt wird, bevor es nach der Kompression in einer ersten Kühlstufe einen Teil seiner Wärmeenergie, die oberhalb seiner kritischen Temperatur gebunden ist, an einen Wärmeträge rekuperativ abgibt und danach in einer zweiten, parallel arbeitenden Kühlstufe seine Wärmeenergie vor seiner Entspannung auf Verdampfungsdruck bis in die Nähe des Temperaturniveaus der Verdampfung durch Kondensation zur eigenen Vorwärmung vor der Kompression an sich selbst und an den Wärmeträger über getrennte Stoffströme rekuperativ überträgt, wogegen der Kreisprozess im Zyklus der Entladung des Speichers als Kraftprozess arbeitet, bei dem die Wärmeenergie des Arbeitsmittels nach seiner technische Arbeit leistenden Expansion zur Verdampfung und Vorwärmung eines Teiles des Arbeitsmittels unter überkritischem Druck verwendet wird, der anschließend gemeinsam mit dem anderen Teilstrom, der durch den Wärmeträger verdampft und vorgewärmt wurde, durch rekuperative Übertragung von Wärmeenergie vom Wärmeträger, vor der technische Arbeit leistenden Expansion des gesamten Stoffstromes des Arbeitsmittels, überhitzt wird.

2. Verfahren nach Anspruch 1, **dadurch gekennzeichnet, dass** das Arbeitsmittel des reversiblen Kreisprozesses Kohlendioxid ist.

3. Verfahren nach Anspruch 1 und 2, **dadurch gekennzeichnet, dass** die im Zyklus der Beladung des Wärmespeichers nicht an den Wärmeträger übertragbare Wärmeenergie an externe Abnehmer abgeführt wird, oder die Bilanz zwischen Energiezuführung und -abführung geschlossen wird durch eine technische Arbeit leistende Expansion eines Teilstromes des Arbeitsmittels nach der ersten Kühlstufe auf Verdampfungsdruck.

## Claims

1. A method for the storage and recovery of energy, in particular solar and wind energy which, converted into electrical energy, is used to charge and discharge a heat accumulator with the aid of a reversible cyclic thermal process, which during the accumulator charging cycle operates as a heat pump process which takes up local ambient heat, raises the temperature level and thus charges the heat accumulator thermally in that the working medium of the cycle process, after evaporation by way of the ambient heat below its critical pressure, is recuperatively pre-heated to above its critical temperature through the introduction of internal process heat prior to compression to supercritical pressure, before recuperatively releasing part of its thermal energy, which is latent above its critical temperature, to a heat-transfer medium after compression in a first cooling stage and then in a second parallel cooling stage, before expansion to an evaporation pressure in the vicinity of the temperature of evaporation by way of condensation, recuperatively transfers thermal energy to itself for its own pre-heating prior to compression and to the heat-transfer medium via separate mass flows, whereas during the accumulator discharging cycle, the cyclic process operates as a power process, in which thermal energy of the working medium, after the expansion performing its technical work, is used to evaporate and pre-heat under supercritical pressure one part of the working medium, which together with the other partial flow which was evaporated and pre-heated by the heat-transfer medium is subsequently superheated through the recuperative transfer of thermal energy from the heat-transfer medium prior to the expansion of the whole mass flow of the working medium performing the technical work.

2. A method according to Claim 1, **characterised in that** the working medium of the reversible cyclic process is carbon dioxide.

3. A method according to Claims 1 and 2, **characterised in that** the thermal energy which cannot be transferred to the heat-transfer medium during the accumulator charging cycle is output to an external consumer, or the balance between energy input and output is settled by expansion to evaporation pressure of a partial flow of the working medium after the first cooling stage to perform technical work.

## Revendications

1. Procédé d'accumulation et de récupération d'énergie, en particulier d'énergie solaire et éolienne, qui est transformée en énergie électrique et qui est utilisée pour charger et décharger un accumulateur de chaleur au moyen d'un circuit thermique réversible qui fonctionne en cycle de pompe thermique dans le cycle de charge de l'accumulateur, qui absorbe la chaleur ambiante locale et augmente le niveau de température de celle-ci pour charger thermiquement l'accumulateur de chaleur en préchauffant le fluide du circuit au-dessus de sa température critique par apport récupératif de chaleur interne du processus après son évaporation par la chaleur ambiante en dessous de sa pression critique avant sa compression à la pression hypercritique, avant qu'il ne transmette une partie de son énergie calorifique accumulée en dessus de sa température critique à un caloporteur par récupération après sa compression, dans une première phase de refroidissement, et qu'il ne transmette son énergie calorifique à soi-même et au caloporteur par condensation et récupération dans une seconde phase de refroidissement ayant lieu en parallèle, avant sa détente à la pression d'évaporation jusqu'à proximité du niveau de température de l'évaporation, pour son propre préchauffage avant la compression, par des flux de matière séparés, tandis que, pendant le cycle de décharge de l'accumulateur, le circuit fonctionne en cycle de force qui utilise l'énergie calorifique du fluide après son expansion fournissant un travail technique pour l'évaporation et le préchauffage d'une partie du fluide en dessous de la pression hypercritique, cette partie du fluide étant ensuite surchauffée avec l'autre flux partiel qui a été évaporé et préchauffé par le caloporteur par transmission récupérative d'énergie calorifique du caloporteur avant l'expansion du flux total du fluide, fournissant un travail technique.

2. Procédé selon la revendication 1, **caractérisé en ce que** le fluide du circuit réversible est du gaz carbonique.

3. Procédé selon les revendications 1 et 2, **caractérisé en ce que** l'énergie calorifique ne pouvant pas être transmise au caloporteur dans le cycle de charge de l'accumulateur de chaleur est évacuée vers des consommateurs externes ou que le bilan d'apport et de dissipation d'énergie est bouclé par une expansion d'un flux partiel du fluide, fournissant un travail technique, après la première phase de refroidissement à la pression d'évaporation.
